# EUROPÄISCHE PATENTSCHRIFT

(11) **EP 0 716 143 B1**
(45) Veröffentlichungstag und Bekanntmachung des Hinweises auf die Patenterteilung: **02.06.1999**
(21) Anmeldenummer: 95119115.4
(22) Anmeldetag: 05.12.1995
(51) Int. Cl.: C11D 3/00, C11D 3/20, C11D 3/18, C11D 3/382, C11D 7/44, C11D 1/825, A01N 65/00

(54) **Verfahren zur Reinigung und Desinfektion von textilen Gegenständen und biologisches Desinfektions- und Reinigungsmittel**
Process for cleaning and disinfecting textile articles and biologic agent for cleaning and disinfecting
Procédé de nettoyage et de désinfection d'articles textiles agent de nettoyage et de désinfection biologique

(30) Priorität: 09.12.1994 DE 4443932; 07.04.1995 DE 19512687
(43) Veröffentlichungstag der Anmeldung: 12.06.1996
(73) Patentinhaber: Veith, Horst K., 83700 Rottach-Egern (DE)
(72) Erfinder: Veith, Horst K., 83700 Rottach-Egern (DE)
(74) Vertreter: Wanischeck-Bergmann, Axel, Dipl.-Ing.

(56) Entgegenhaltungen:
- EP-A- 0 144 820
- EP-A- 0 536 820
- DE-A- 3 714 486
- DE-A- 4 139 199
- DE-A- 4 202 549
- DE-A- 4 311 409

## Beschreibung

Die Erfindung betrifft ein Verfahren zur Reinigung und Desinfektion von im wesentlichen quaderförmig ausgebildeten textilen Gegenständen, wie beispielsweise Matratzen oder andere einen mit textilem Stoff umspannten, federelastischen Gegenstände. Ferner betrifft die Erfindung ein biologisches Desinfektions- und Reinigungsmittel.

Es ist bekannt, beispielsweise textilen Fußbodenbelag oder Polstermöbel mittels Staubsauger oder ähnlichen Einrichtungen zu reinigen, d. h. von anhaftendem Staub und losen Verschmutzungen zu befreien.

Zunehmend zeichnet sich der Einsatz von elektronisch geregelten Staubsaugern ab, wobei die Saugleistung auf den zu reinigenden Belag oder den zu reinigenden Gegenstand abstimmbar ist. Insbesondere bei flauschigen Textilgeweben oder Teppichen mit entsprechendem Flor kann eine maximale Saugleistung, die aus Reinigungsgründen wünschenswert wäre, nicht aufgebracht werden. Eine zu hohe Saugleistung würde in diesem Fall zu irreversiblen Beschädigungen der Gewebestruktur bzw. der Gewebeoberfläche führen. Darüber hinaus besteht bei dem voranstehend beschriebenen Verfahren zur Reinigen von textilen Gegenständen der Nachteil, daß diese Verfahren nicht beliebig bei im wesentlichen quaderförmig ausgebildeten textilen Gegenständen, wie beispielsweise Matratzen angewendet werden können. Hierbei hat es sich als nachteilig erwiesen, daß zwar die Oberfläche dieser Gegenstände ausreichend gereinigt werden, im Innenbereich des textilen Gegenstandes vorhandene Verunreinigungen, insbesondere Allergene, wie Hausstaubmilben und deren Ausscheidungen nicht aus den textilen Gegenstand mit dem erforderlichen Erfolg entfernt werden.

Es ist darüber hinaus, beispielsweise aus der DE-C-41 39 199 ein Verfahren zum Reinigen von Matratzen, Polstermöbeln und anderen textilen Einrichtungsgegenständen bekannt, bei welchem unter Verwendung einer Unterdruckerzeugungs- und Saugvorrichtung eine mechanische Schwingung im Frequenzbereich von 10 bis 12 kHz in den textilen Gegenstand eingekoppelt wird, der die im Inneren des textilen Gegenstandes angeordneten Verunreinigungen, insbesondere die voranstehend genannten Allergene aus den Fasern des textilen Gegenstandes löst und durch die Saugbehandlung aus dem textilen Gegenstand absaugt. Dieses Verfahren hat sich in der Praxis bewährt.

Es ist darüber hinaus bekannt, zur Reinigung von Textilien, die Polstermöbel und/oder Gardinen diverse Fleckenentferner zu verwenden, die entweder mit Tensiden oder mit rein biologischen Bestandteilen versehen sind, wobei diese Vorgehensweise den Nachteil aufweist, daß der textile Gegenstand, wie Polstermöbel und/oder Gardinen oder Teppiche mit dem Fleckenentferner, der in der Regel einen großen Anteil Wasser aufweist, durchfeuchtet werden, so daß insbesondere Polstermöbel und Teppiche, beispielsweise Teppichböden für einen längeren Zeitraum nicht benützt werden können, da vor einer erneuten Benutzung nach der Reinigung diese Gegenstände erst vollständig austrocknen müssen. Hierbei ist es jedoch nachteilig, daß beispielsweise die unterhalb der textilen Bespannung eines Polstermöbels oder unterhalb des Textilflors eines Teppichbodens angeordneten Bestandteilen der voranstehend genannten Gegenstände ebenfalls durchfeuchtet werden. Im Falle eines Polstermöbels kann es somit zu Beeinträchtigungen, beispielsweise zur Korrosion vorhandener Federelemente, kommen. Die Durchfeuchtung eines Teppichbodens hat den Nachteil, daß die auf dem Boden aufliegende Kunststoffschicht des Teppichbodens porös werden kann und daß sich hier durch die Feuchtigkeit Brutplätze für Bakterien, Pilze oder dergleichen bilden.

Schließlich ist es bei der vorhergehend beschriebenen Vorgehensweise nachteilig, daß es mit einem Fleckenentferner nur möglich ist, Verschmutzungen aus den Textilien zu entfernen. Um auch eine Geruchsneutralisation durchzuführen, bzw. eine antibakterielle Desinfektion zu erzielen, ist es notwendig, daß zusätzlich weitere flüssige Reinigungsmittel bzw. Desinfektionsmittel angewendet werden, mit denen sowohl eine Geruchsneutralisation als auch eine Desinfektion der textilen Gegenstände erzielbar sind. In der Regel handelt es sich bei solchen Fleckenentfernern, Feruchsneutralisatoren und Desinfektionsmitteln um chemische Mittel, mit denen ein hinsichtlich der Reinigung und Desinfektion gutes Ergebnis erzielbar ist. Die voranstehend genannte Nachteile dieser Vorgehensweise sind jedoch insbesondere bei solchen Gegenständen von besonderem Nachteil, die unmittelbar nach der Reinigung und Desinfektion erneut in Gebrauch genommen werden sollen. Zu nennen sind hierbei insbesondere die Auflagen von Polstermöbeln aber auch Matratzen, bei denen eine Trocknungszeit von bis zu mehreren Stunden bzw. Tagen insofern nachteilig ist, daß ein solcher Einrichtungsgegenstand nicht benutzt werden kann. Insbesondee im Haushaltsbereich ist es daher nicht möglich, Matratzen zu reinigen, ohne auf bestimmte profesionelle Reinigungsverfahren ausweichen zu müssen.

Im Bereich der Teppichböden ist darüber hinaus eine mechanische Reinigungsmethode bekannt, bei der mittels eines Reinigungsgerätes ein flüssiges Reinigungsmittel auf den Teppichboden aufgebracht und unmittelbar nach der Eingabe wieder abgesaugt wird. Hierdurch soll eine Durchfeuchtung des zu reinigenden Teppichbodens vermieden werden. Es hat sich jedoch gezeigt, daß auch bei einer derartigen Vorgehensweise der Teppichboden insoweit durchfeuchtet wird, daß ein Begehen des Teppichbodens kurze Zeit nach der Reinigung nicht möglich ist. Insoweit eignet sich diese mechanische Methode auch nicht für die Reinigung von Polstermöbeln, die kurze Zeit nach der Reinigung erneut benutzt werden sollen.

Bei Matratzen hat sich darüber hinaus gezeigt, daß eine Reinigung nur mit aufwendigen Verfahren möglich ist, wenn eine Reinigungsstufe erreicht werden soll, die insbesondere die Hausstauballergie verursachenden Allergene entfernt oder zumindest neutralisiert. Hausstauballergien werden nachweislich durch Guanin verursacht, einem Bestandteil der Ausscheidungen der Hausstaubmilben. Die Entfernung dieses Guanins ist jedoch insbesondere bei der Reinigung von Matratzen sehr aufwendig und führt letztendlich nicht unbedingt zu dem Ergebnis, daß die Matratze frei von diesem Allergieverursacher ist, da selbst feinste Partikel des Guanins im Matratzenbezug bzw. im Matratzendrell hängen bleiben. Zwar sind zwischenzeitlich Verfahren entwickelt worden, die eine sehr weitreichende Entfernung des Guanins ermöglichen, so daß die Matratzen soweit gereinigt sind, daß eine erhebliche Belastung nur bei Allergikern auftritt, jeeoch kann das Verbleiben des Guanins mit diesen in der Regel mechanisch wirkenden Verfahren nicht verhindert werden. Ein Reinigungs- und Desinfektionsmittel, mit dem Guanin entfernt oder zumindest in soweit neutralisiert wrden kann, das Hausstauballergien nicht auftreten, ist nicht bekannt.

Ein für die Teppich- und Teppichbodenreinigung sowie zur Polsterstoffreinigung verwendbares Reinigungsmittel mit einem Alkohlanteil von 0,2 Teilen auf einem Teil Isoprenoid ist beispielsweise aus der DE 43 11 409 A1 bekannt.

Ausgehend von diesem Stand der Technik liegt der Erfindung die **Aufgabe** zugrunde, ein wirksames, weitestgehend chemiefreies Verfahren zur Reinigung und zur Desinfektion von textilen Gegenständen, insbesondere Matratzen zu schaffen. Ferner liegt der Erfindung die **Aufgabe** zugrunde, ein Reinigungsmittel zu schaffen, das insbesondere bei solchen Textilien verwendet werden kann, die im Zuge der Reinigung nicht durchnäßt werden dürfen, um insbesondere eine schnelle Wiederverwendung des textilen Gegenstandes zu ermöglichen und Beschädigungen im Inneren des textilen Gegenstandes zu vermeiden, wobei gleichzeitig Flecken und Gerücke entfernt und die Textilie antibakteriell behandelt wird. Ferner ist es eine weitere **Aufgabe** der Erfindung, ein gattungsgemäßes Mittel zu schaffen, das in bezug auf Guanin zumindest neutralisierend wirkt, so daß eine Verwendung bei der Reinigung von Matratzen möglich ist.

Die **Lösung** dieser Aufgabenstellung sieht bei einem gattungsgemäßen biologischen Desinfektions- und Reinigungsmittel vor, daß dieses aus einem Kondensationsprodukt des Isoprens (Isoprenoid) und einem leicht flüchtigen, antibakteriell wirkenden Alkohol mit einwertigem Kohlenwasserstoffrest besteht, wobei der Alkoholgehalt zwischen 80 und 98% liegt und der Rest Kondensationsprodukt des Isoprens ist, und das Kondensationsprodukt des Isoprens ggf. eine Emulgator enthält.

Die **Lösung** dieser Aufgabenstellung sieht bei einem gattungsgemäßen Verfahren vor, daß in einem ersten Schritt eine Probe der Schmutzpartikel entnommen wird, anschließend die Probe hinsichtlich ihrer Allergenbelastung analysiert wird, woraufhin der Verschmutzungsgrad des zu reinigenden Gegenstandes bestimmt und der Gegenstand in Abhängigkeit des ermittelten Verschmutzungsgrades einer chemiefreien, vorzugsweise saugenden Hauptreinigung seines ummantelten Innenraums unterzogen wird, wobei der Verschmutzungsgrad die Zeitdauer der Hauptreinigung pro Flächenabschnitt des zu reinigenden Gegenstandes bestimmt, und daß in einem abschließenden Schritt der zu reinigende Gegenstand mit einem Gemisch aus einem leicht flüchtigen, antibakteriell wirkenden Alkohol und einem Kondensationsprodukt des Isoprens (Isoprenoid) in einem Mischungsverhältnis von 1 Teil Isoprenoid auf 10 bis 75 Teilen Alkohol desinfiziert und an seiner Oberfläche gereinigt wird.

Das erfindungsgemäße Verfahren mit den voranstehend genannten Merkmalen hat insbesondere den Vorteil, daß eine in Abhängigkeit des Verschmutzungsgrades zeitlich ausgelegte Reinigung des quaderförmig ausgebildeten textilen Gegenstandes, beispielsweise der Matratze, durchgeführt wird. Hierzu wird die Zeitdauer des Reinigungsvorgangs über die Entnahme und Beurteilung einer Probe ermittelt, wobei die Reinigung des Gegenstandes chemiefrei, d. h. ohne Anwendung von Chemikalien, beispielsweise Tensiden, erfolgt. Darüber hinaus wird bei der erfindungsgemäßen Reinigung auf die Verwendung von Flüssigkeiten verzichtet, die eine vollständige Durchfeuchtung des textilen Gegenstandes verursachen würden, was in der Regel zu Fäulnisprozessen mit entsprechender Geruchsbelästigung führt. Nach der Reinigung des textilen Gegenstandes wird dann noch eine Desinfektion des Gegenstandes mit einem rein biologischen Mittel durchgeführt, so daß auch verbleibende Rückstände, beispielsweise Allergene, beseitigt werden. Das erfindungsgemäße Verfahren hat sich insbesondere zur Anwendung im Bereich der chemiefreien Matratzenreinigung bewährt, so daß die Kombination aus Reinigung und Desinfektion in der erfindungsgemäßen Verfahrensweise beispielsweise auch im Sterilbereich in Krankenhäusern, in Hotels oder sonstigen Einrichtungen mit einer Vielzahl von Matratzen, einsetzbar ist.

Es hat sich ferner als vorteilhaft erwiesen, die erfolgte Reinigung und Desinfektion mit einer Bescheinigung, vorzugsweise einem aufgeklebten Prüfsiegel, zu attestieren, wobei die Bescheinigung vorzugsweise Zeitpunkt der erfolgten Reinigung, Art der Reinigung und Zeitpunkt der nächsten erforderlichen Reinigung angibt. Diese Vorgehensweise gibt sowohl für den Anwender des Verfahrens als auch für den Verbraucher des Verfahrens einen Hinweis auf die nächst notwendige Durchführung des erfindungsgemäßen Reinigungs- und Desinfektionsverfahrens, so daß beispielsweise im Krankenhausbereich das Auftreten von Krankheits- oder Allergieerregern wirkungsvoll verhindert werden kann. Darüber hinaus bietet sich für den Betreiber eines Hotels, Altenheims oder dergleichen die Möglichkeit des Qualitätsnachweises, da in zunehmender Weise Allergien aufgrund von Hausstaubmilben oder dergleichen auftreten, die insbesondere in Matratzen oder anderen im wesentlichen quaderförmig ausgebildeten textilen Gegenständen vorgefunden werden.

Die Bestimmung des Verschmutzungsgrades erfolgt vorzugsweise mit einer Tabelle, in welcher die bestimmten Parameter zumindest einer Probenentnahme eingetragen werden. Diese Vorgehensweise ist insofern vorteilhaft, da die Reinigung und Desinfektion der textilen Gegenstände durch Personen ohne besondere Vorbildung oder Ausbildung durchführbar sein soll. Nach der Probenentnahme und Bestimmung des Verschmutzungsgrades werden die ermittelten Parameter in eine vorbereitete Tabelle eingetragen, aus welcher sich ohne weiteres die erforderliche Vorgehensweise für die Reinigung und Desinfektion des textilen Gegenstandes ergibt. Beispielsweise kann aus der Tabelle abgelesen werden, daß bei einem Verschmutzungsgrad der Größe x eine Reinigung des textilen Gegenstandes über einen Zeitraum von beispielsweise 15 oder 20 Minuten durchgeführt werden muß, wobei vorausgesetzt wird, daß die Reinigung des textilen Gegenstandes gleichmäßig über zumindest zwei seiner Flächen, vorzugsweise der Hauptflächen, erfolgt. Selbstverständlich ist es auch möglich, mehrere Probenentnahmen an verschiedenen Stellen des textilen Gegenstandes durchzuführen, um ein genaueres Ergebnis für die Bestimmung des Verschmutzungsgrades zu erhalten. Diese Vorgehensweise bietet sich beispielsweise dann an, wenn es sich um einen großflächigen textilen Gegenstand, beispielsweise einer Matratze eines französischen Bettes oder dergleichen, handelt.

Nach einer Weiterbildung des erfindungsgemäßen Verfahrens ist vorgesehen, daß die entnommene Probe einem chemischen Allergentest unterzogen wird, bei dem die Probe in wäßrig-alkoholischer Alkalimetallhydroxid-Lösung suspendiert und mit dem entstehenden Extrakt eine Farbreaktion mit Hilfe einer aromatischen Diazoverbindung durchgeführt wird, wobei die Farbreaktion hinsichtlich ihres Auftretens als Indiz für die Belastung des Gegenstandes mit Hausstaubmilben-Rückständen bewertet wird.

Ein derartiges Verfahren zum Nachweis von allergenhaltigem Hausstaub ist beispielsweise aus der DE-C-33 44 087 bekannt. Bei diesem Verfahren wird mittels eines Staubsaugers eine Probe aus dem textilen Gegenstand entnommen. Für den Farbnachweis dosiert man die Staubprobe (ca. 2 ml) in einen Glas- oder Kunststoffzylinder von ca. 8 ml Inhalt. Hierzu fügt man ca. 4 ml einer wäßrig-methanolischen Extraktionslösung, bei der das Gewichtsverhältnis von Methanol zu Wasser 75 : 25 beträgt, und in der 5 Gew. % KOA gelöst sind. Dazu fügt man die erforderliche Menge Diazosulfanilsäure (eine Mikrospatelspitze; ca. 20 mg/ml Staub) und schüttelt das verschlossene Gefäß ca. 10 Sekunden. Danach öffnet man das Gefäß. Nach etwa 3 Minuten taucht man einen Streifen aus weißem Filterpapier (0,5 cm ²) in die abgesetzte Extraktionslösung und beurteilt die bei Milbenbefall auftretende ziegelrote Färbung. Befinden sich in dem zu reinigenden Gegenstand keine Milbenrückstände, so bleibt die Verfärbung aus.

Es ist nach einem weiteren Merkmal der Erfindung vorgesehen, daß der Gegenstand während der Probenentnahme und/oder der Hauptreinigung einer Schwingung, vorzugsweise im Infraschall- oder im Ultraschallbereich ausgesetzt wird. Diese Behandlung löst die im Inneren des textilen Gegenstandes an seinen Fasern anhaftenden Verschmutzungspartikel und insbesondere die dort angelagerten Allergene, wie Hausstaubmilben und/oder deren Ausscheidungen. Durch das Lösen dieser Partikel wird das Absaugen dergleichen wesentlich vereinfacht.

Darüber hinaus ist es nach einem weiteren Merkmal der Erfindung vorgesehen, daß zumindest während der Hauptreinigung Gas einer bestimmten Konzentration und Temperatur in den Gegenstand eingeleitet wird, welches Hausstaubmilben abtötet. Diese Vorgehensweise hat insbesondere den Vorteil, daß noch lebende Hausstaubmilben abgetötet werden, die dann anschließend entweder direkt abgesaugt werden oder erst einer Schwingungsbehandlung ausgesetzt und anschließend abgesaugt werden.

Nach der Durchführung der Hauptreinigung hat es sich als vorteilhaft erwiesen, eine Desinfektion der Außenseiten des textilen Gegenstandes, insbesondere der Matratze, durchzuführen. Insbesondere die Seitenbereiche der Matratze sind mit den voranstehend beschriebenen Hauptreinigungsverfahren nur mit großem Zeitaufwand in erforderlicher Weise zu reinigen. Darüber hinaus können nach der Hauptreinigung noch Allergenrückstände im textilen Gegenstand verbleiben, die mit dem rein biologischen Desinfektionsmittel abgetötet und desinfiziert werden können. Hierbei hat es sich als vorteilhaft erwiesen, daß das als biologisches Desinfektions- und Reinigungsmittel ein Gemisch aus einem leicht flüchtigen, antibakteriell wirkenden Alkohol und einem Kondensationsprodukt des Isoprens (Isoprenoid) in einem Mischungsverhältnis von 1 Teil Isoprenoid auf 10 bis 75 Teilen Alkohol verwendet wird. Diese Mischung hat den Vorteil, daß neben einer Desinfektionswirkung auch eine Reinigungswirkung erzielt wird, so daß beispielsweise Schmutz- oder Feuchtigkeitsränder in den Oberflächen des textilen Gegenstandes, insbesondere der Matratze, gereinigt werden. Die Mischung aus Alkohol und einem Isoprenoid ist darüber hinaus über längere Zeit gebrauchsfähig, so daß die Mischung im gemischten Zustand lagerfähig ist. Ein Anmischen des Desinfektion- und Reinigungsmittels vor Ort ist daher nicht notwendig.

Vorzugsweise wird als Alkohol Isopropyl-Alkohol und als Isoprenoid Terpenöl verwendet, wobei letzteres vorzugsweise mit zumindest einem Aromastoff, beispielsweise Orangenaroma, vermischt wird. Die Verwendung des Aromastoffes hat den Vorteil, daß der stechend beißende Desinfektionsgeruch des Alkohols von dem Aromastoff überlagert wird, so daß ein angenehmer Geruch entsteht. Gerüche aufgrund des vorangegangenen Reinigungsverfahrens werden ebenfalls überlagert. Das Terpenöl ist hierbei ein farbloses bis hellgelbes, dünnflüssiges, würzig riechendes ätherisches Öl. Es fällt als Destillationsprodukt aus Terpentin an und wirkt als Lösungsmittel für Harze, Kautschuk, Lacke und Wachsprodukte. Es ist aber auch möglich, Terpentinölersatz, beispielsweise Lösungsmittelgemische, z. B. aus hochsiedendem Benzin, aromatischen und zyklischen Kohlwasserstoffen zu verwenden, die ein ähnliches Lösungsvermögen wie Terpenöl aufweisen. Vorteil dieser Terpentinölersatzstoffe ist ihre billige Herstellungsweise.

Besonders gute Reinigungs- und Desinfektionsergebnisse haben sich ergeben, wenn das Gemisch aus Alkohol und Isoprenoid ein Mischungsverhältnis von 1 Teil Isoprenoid auf 10 bis 50 Teilen Alkohol aufweist.

Um ein Durchfeuchten des textilen Gegenstandes bei der abschließenden Reinigung und Desinfektion der Oberflächen des textilen Gegenstandes zu vermeiden, ist vorgesehen, daß das biologische Desinfektions- und Reinigungsmittel auf den zu reinigenden Gegenstand aufgesprüht wird. Somit wird nur zerstäubte Feuchtigkeit auf die Oberfläche des textilen Gegenstandes aufgetragen, die in der Regel nicht in den Innenraum des textilen Gegenstandes, beispielsweise der Matratze, eindringt, so daß eine Durchfeuchtung dieses Bereichs unterbleibt.

Um die Haltbarkeit des biologischen Desinfektions- und Reinigungsmittels weiter zu verlängern, wird dem Mittel ein Emulgator zugefügt.

Bei dem voranstehend beschriebenen biologischen Desinfektions- und Reinigungsmittel hat es sich insbesondere erwiesen, daß beim Entfernen von Flecken auf Matratzen keine Ränder entstehen. Dies ist insbesondere von Bedeutung, wenn mit dem Desinfektions- und Reinigungsmittel hartnäckige Verschmutzungen im Bereich der Matratzenoberfläche gereinigt und desinfiziert werden sollen, da dann beispielsweise Desinfektions- und Reinigungsmittel in größerer Menge auf die Matratzenoberfläche aufgetragen werden muß. Hierbei entstehen dann im Vergleich zum Stand der Technik, beispielsweise bei der Reinigung derartiger Fläche mit einer Lösung aus Wasser und Tensiden, keine Verschmutzungsränder.

Der Vorteil des erfindungsgemäßen Desinfektions- und Reinigungsmittels liegt einerseits darin, daß es rein biologisch ist, so daß es keine Umweltbelastung darstellt. Darüberhinaus wird mit diesem Desinfektions- und Reinigungsmittel ein Durchfeuchten der Textilien, insbesondere beispielsweise des Matratzendrells dadurch vermieden, daß sich der Alkohol bei Zimmertemperatur verflüchtigt, so daß er gerade noch in den Matratzendrell oder eine andere Textilie eindringen und dort eine antibakterielle und Flecken entfernende Wirkung erzielen kann. Vermieden wird jedoch, daß der Alkohol in das Innere des Polstermöbels oder der Matratze oder in die auf dem Boden aufliegende Schicht eines Teppichbodens eindringen kann und dort eine Durchfeuchtung verursacht. Demzufolge ist es bei dem erfindungsgemäßen Desinfektions- und Reinigungsmittel von Vorteil, daß hiermit zwar eine tiefgreifende biologische Reinigung der Textilie erzielt wird, diese jedoch aufgrund des geringen Durchfeuchtungsgrades in kurzer Zeit, beispielsweise nach 10 min. wieder verwendbar ist, so daß insbesondere auch Matratzen mit diesem Desinfektions- und Reinigungsmittel gereinigt werden können, die kurze Zeit später als Schlafstätten dienen können. Ferner hat es sich bei dem erfindungsgemäßen Verfahren gezeigt, daß Guanin der Hausstauballgerie aus den Textilien in wirksamer Weise entfernt bzw. neutralisiert, so daß die Allergenbelastung in eindrucksvoller Weise reduziert wird. Guanin ist ein Bestandteil des Hausstaubmilbenkots.

Vorzugsweise ist das Kondensationsprodukt als Konzentrat ausgebildet, welches aus einem vorzugsweise aromatisierten Terpen und einem Alkohol mit einwertigem Kohlenwasserstoffrest, insbesondere Isopropanol besteht, die einem Verhältnis von 3 zu 1 bis 4 zu 1 gemischt sind. Das aromatisierte Terpen hat den Vorteil, daß hierdurch Gerüche in den Textilien neutralisiert werden, so daß mit dem erfindungsgemäßen Desinfektions- und Reinigungsmittel nicht nur eine Desinfektion und Reinigung durchgeführt wird, sondern auch eine Entfernung von unangenehmen Gerüchen, die beispielsweise durch Transpirationen auf Matratzen erzeugt werden.

Nach einem weiteren Merkmal der Erfindung ist vorgesehen, daß der Alkoholgehalt des Desinfektions- und Reinigungsmittels zwischen 80 % und 98 %, vorzugsweise bei 96,5 % liegt und der Rest Kondensationsprodukt des Isoprens ist, welcher vorzugsweise 3,5 % beträgt. Bei einem Alkoholgehalt von unter 80 % erhält das biologische Desinfektions- und Reinigungsmittel gemäß der Erfindung einen klebrigen Zustand, wobei dann die zu reinigenden Textilien zu viel der klebrigen Substanz aufnehmen und vergilben, d. h. insgesamt eine Farbveränderung erhalten. Die Verwendung von Isopropanol als Alkoholbestandteil des Konzentrats hat darüberhinaus den Vorteil, daß hierdurch das Konzentrat temperaturunabhängig wird, so daß das Konzentrat in dem hier interessierenden Bereich eine lange Lagerfähigkeit erhält und beispielsweise auch in handelsüblichen Regalen gelagert und angeboten werden kann.

Das Kondensationsprodukt des Isoprens enthält nach einem weiteren Merkmal der Erfindung zwischen 30 % und 60 %, vorzugsweise 55 % Orangenterpen, wobei die Erfindung jedoch nicht auf einen Geruchsneutralisator auf Basis von Orangen beschränkt ist. Vielmehr sind insbesondere auch andere Zitrusfrüchte für das biologische Desinfektions- und Reinigungsmittel geeignet.

Es ist vorgesehen, daß das Kondensationsprodukt des Isoprens bis zu 25 % Aromastoffe, insbesondere solcher von Zitrusfrüchten, vorzugsweise Orangenöl enthält, welches insbesondere kalt gepreßt ist.

Um die Haltbarkeit des biologischen Desinfektions- und Reinigungsmittels weiter zu verlängern, wird dem Mittel ein Emulgator zugefügt, wobei es sich hierbei insbesondere um Rizinusölethoxylat und/oder geringfügig ungesättigtes Fettalkoholethoxylat mit einem Anteil von bis zu 20 %, vorzugsweise 15 % handelt. Vorzugsweise wird dem Kondensationsprodukt des Isoprens ein Teil Fettalkoholethoxylat in geringfügig ungesättigter Form auf zwei Teile Rizinusölethoxylat zugesetzt, wobei es sich ferner als vorteilhaft erwiesen hat, daß das geringfügig ungesättigte Fettalkoholethoxylat bis zu 8, vorzugsweise 6,5 mol EO aufweist.

Mit einem biologischen Desinfektions- und Reinigungsmittel zur Reinigung von Textilien, insbesondere von nicht durchnäßbaren Textilien, wie Polstermöbel, Gardinen, Teppiche, Matratzen oder dergleichen, sind vorteilhafte Ergebnisse dann erzielt worden, wenn das Mittel aus einem Konzentrat aus einem Kondensationsprodukt des Isoprens (Isoprenoid) und einem Alkohol mit einwertigem Kohlenwasserstoffrest, nämlich II-Propanol (Isopropylalkohol) mit einem Mischungsverhältnis von 96,5 % II-Propanol (Isopropylalkohol) zu 3,5 % Konzentrat, bestehend aus 55 % Orangenterpen, 15 % kalt gepreßtem Orangenöl, 10 % Rizinusölethoxylat, 5 % geringfügig ungesättigtem Fettalkoholethoxylat mit ca. 6.5 mol EO und 15 % Isopropanol besteht. Diese Mischung hat den Vorteil, daß neben einer Desinfektionswirkung auch eine Reinigungswirkung erzielt wird, so daß beispielsweise Schmutz- oder Feuchtigkeitsränder in den Oberflächen des textilen Gegenstandes, insbesondere der Matratze, gereinigt werden. Die Mischung aus Alkohol und einem Isoprenoid ist darüber hinaus über längere Zeit gebrauchsfertig, so daß die Mischung im gemischten Zustand lagerfähig ist. Ein Anmischen des Desinfektions- und Reinigungsmittels vor Ort ist daher nicht notwendig, so daß diese Mischung auch in haushaltsüblichen Verpackungen an den Endverbraucher abgegeben werden kann, ohne daß die Reinigung von Fachleuten durchgeführt werden muß. Ferner werden die voranstehend beschriebenen Vorteile bezüglich des Entfernens des Guanins erzielt.

Die Verwendung des Isopropylalkohols und des Terpenöls als Isoprenoid, wobei letzteres mit zumindest einem Aromastoff, beispielsweise Orangenaroma vermischt ist, hat den Vorteil, daß der stechend beißende Desinfektionsgeruch des Alkohols von dem Aromastoff überlagert wird, so daß ein angenehmer Geruch entsteht. Bei der Reinigung der textilen Gegenstände entstehende Gerüche werden ebenfalls überlagert. Das Terpenöl ist hierbei ein farbloses bis hellgelbes, dünnflüssiges, würzig riechendes ätherisches Öl. Es fällt als Destillationsprodukt aus Terpentin an und wird als Lösungsmittel für Harze, Kautschuk, Lacke und Waschprodukte verwendet. Es ist aber auch möglich, Terpentinölersatz, beispielsweise Lösungsmittelgemische, z. B. aus hochsiedendem Benzin, aromatischen und zyklischen Kohlenwasserstoffen zu verwenden, die ein ähnliches Lösungsvermögen wie Terpenöl aufweisen. Vorteil dieser Terpentinölersatzstoffe ist ihre billige Herstellungsweise.

Um ein Durchfeuchten des textilen Gegenstandes bei der Reinigung und Desinfektion der Oberfläche des textilen Gegenstandes zu vermeiden, ist vorgesehen, daß das biologische Desinfektions- und Reinigungsmittel auf den zu reinigenden Gegenstand aufgesprüht wird. Somit wird nur zerstäubte Feuchtigkeit auf die Oberfläche des textilen Gegenstandes aufgetragen, die in der Regel nicht in den Innenraum des textilen Gegenstandes, beispielsweise der Matratze, eindringt, so daß eine Durchfeuchtung dieses Bereiches unterbleibt. Ferner hat das Aufsprühen des Desinfektions- und Reinigungsmittels den Vorteil, daß hier das Verflüchtigen des Alkohols unterstützt wird, das die Oberfläche vieler kleiner Partikel größer ist als die Oberfläche einer beispielsweise mit einem Schwamm oder einem Lappen aufgetragenen Flüssigkeit.

Bei dem voranstehend beschriebenen biologischen Desinfektions- und Reinigungsmittel hat es sich erwiesen, daß beim Entfernen von Flecken auf Matratzen keine Ränder entstehen. Dies ist insbesondere von Bedeutung, wenn mit dem Desinfektions- und Reinigungsmittel hartnäckige Verschmutzungen im Bereich der Matratzenoberfläche gereinigt und desinfiziert werden sollen, da dann beispielsweise Desinfektions- und Reinigungsmittel in größerer Menge auf die Matratzenoberfläche aufgetragen werden muß. Hierbei entstehen dann im Vergleich zum Stand der Technik, beispielsweise bei der Reinigung derartiger Flächen mit einer Lösung aus Wasser und Tensiden, keine Verschmutzungsränder.

Aus steuerrechtlichen Aspekten hat es sich als vorteilhaft erwiesen, daß der Alkohol vergält ist, wobei hierzu beispielsweise Pyridin verwendet ist.

Nach einem weiteren Aspekt der Erfindung ist die Verwendung eines Desinfektions- und Reinigungsmittels, bestehend aus einem Gerüche neutralisierenden Bestandteil, nämlich einem Konzentrat aus einem Kondensationsprodukt des Isoprens (Isoprenoid) und einem leicht flüchtigen Alkohol, der einen niedrigen Siedepunkt hat, vorzugsweise II-Propanol (Isopropylalkohol) welcher antibakteriell und in Verbindung mit dem Kondensationsprodukt des Isoprens (Isoprenoid) Flecken entfernend wirkt, zur Reinigung von Textilien, insbesondere von nicht durchnäßbaren Textilien, wie beispielsweise Polstermöbel, Gardinen oder Teppiche vorgesehen.

Ferner sieht die Erfindung die Verwendung eines Desinfektions- und Reinigungsmittels, bestehend aus einem Gerüche neutralisierenden Bestandteil, nämlich einem Konzentrat aus einem Kondensationsprodukt des Isoprens (Isoprenoid) und einem leicht flüchtigen Alkohol, der einen niedrigen Siedepunkt hat, vorzugsweise II-Propanol (Isopropylalkohol), welcher antibakteriell und in Verbindung mit dem Kondensationsprodukt des Isoprens (Isoprenoid) fleckenentfernend wirkt, zur Reinigung von Matratzen, nämlich des Bezugsstoffes bzw. des Matratzendrells vor, wobei Flekken und Gerüche aus dem Bezugsstoff bzw. dem Matratzendrell entfernt werden, die Matratzen in diesem Bereich desinfiziert werden, ohne daß innerhalb des Bezugsstoffes bzw. des Matratzendrells angeordnete Teile oder Schichten der Matratze wesentlich mit Flüssigkeit in Kontakt gebracht werden.

Schließlich ist nach einem weiteren Merkmal der Erfindung die Verwendung eines vorherwähnten biologischen Desinfektions- und Reinigungsmittels zur Reinigung von Textilien, insbesondere von nicht durchnäßbaren Textilien, wie beispielsweise Polstermöbel, Gardinen, Teppiche oder dergleichen, vorzugsweise Matratzen, nämlich des Matratzendrells oder des Matratzenbezugsstoffs vorgesehen.

Nachfolgend werden weitere Merkmale und Vorteile der Erfindung anhand von Beispielen beschrieben.

Bei einer zu reinigenden Matratze wird in einem ersten Schritt mittels eines Staubsaugers eine Probe zur visuellen Erkennung des Verschmutzungsgrades entnommen. Hierzu weist der Staubsauger eine Probenentnahmevorrichtung auf, die beispielsweise in das Saugrohr eingesetzt ist und aus einem Filter besteht, mit dem Fein- und/oder Grobstaub aus dem Saugluftstrom gefiltert wird. Der entnommene Staub wird anschließend einem Allergentest zugeführt, mit dem das Vorliegen von Allergenen, insbesondere solchen der Hausstaubmilbe, nachgewiesen wird. Hierzu wird der entnommene Staub in wäßrig-alkoholischer Alkalimetallhydroxid-Lösung gründlich suspendiert und das entstehende Extrakt einer Farbreaktion mit Hilfe einer aromatischen Diazoverbindung zugeführt, wobei die Farbreaktion hinsichtlich ihres Auftretens als Indiz für die Belastung des Staubes mit Hausstaubmilben-Rückständen bewertet wird. Darüber hinaus kann der Verschmutzungsgrad auch durch die bei der Probenentnahme gewonnene Probenmenge pro Flächeneinheit quantitativ bestimmt werden.

Somit ermöglicht die Probenentnahme sowohl eine qualitative, hinsichtlich der Allergenbelastung, als auch eine quantitative, hinsichtlich des Staubanfalls, Bewertung des Verschmutzungsgrades der zu reinigenden Matratze.

Die gewonnenen Werte werden anschließend in eine Tabelle eingetragen, aus der die Qualität und die Quantität der Verschmutzung abgelesen werden kann. Der hierbei entnommene Verschmutzungsgrad wird in Abhängigkeit von Matratzenart und Matratzengröße transformiert in Werte für die Art und die Zeitdauer der Hauptreinigung. Beispielsweise kann die Art der anzuwendenden Schwingungen, nämlich Ultraschall oder Infraschall in Abhängigkeit des Verschmutzungsgrades gewählt werden. Darüber hinaus kann bei starker Belastung der Matratze mit Hausstaubmilben und deren Ausscheidungen zusätzlich bestimmt werden, daß in die zu reinigende Matratze Gas mit die Hausstaubmilben abtötender Wirkung eingeleitet wird. Diese Parameter können mit dem Staubsauger durchgeführt werden, der eingangs der Probenentnahme gedient hat, sofern dieser Staubsauger über entsprechende Vorrichtungen, beispielsweise Schwingungskoppler und Gasvorratsbehälter mit entsprechenden Einleitdüsen, verfügt.

Anschließend wird unter Heranziehung des Reinigungsprotokolls die Matratze auf ihren beiden Hauptflächen mit dem zuvor erwähnten Staubsauger abgesaugt. Hierbei ist sowohl die Zeitdauer des Saugvorgangs als auch die gleichmäßige Bewegung des Staubsaugers über die Flächen der Matratze zu beachten, so daß eine über die Fläche konstante Reinigung der Matratze durchgeführt wird.

Nachdem die Matratze auf ihren beiden Hauptflächen abgesaugt ist, wird ein biologisches Reinigungs- und Desinfektionsmittel auf alle Flächen der Matratze aufgesprüht, welches aus Isopropylalkohol und Orangeterpenöl besteht. Dieses Reinigungs- und Desinfektionsmittel dient sowohl der Reinigung der Matratzenoberflächen als auch der Beseitigung von Geruchsbelästigungen, insbesondere Fäulnisgerüchen und dergleichen. Schließlich dient das Mittel der Desinfektion, was insbesondere durch die Verwendung des Isopropylalkohols erreicht wird.

Intensive Verunreinigungen der Matratzenoberflächen können aber auch durch Auftragen des Desinfektions- und Reinigungsmittels direkt in flüssiger Form auf die Matratze beseitigt werden. Hierbei ist es besonders vorteilhaft, daß die Flüssigkeit keine Ränder auf den Matratzenoberflächen hinterläßt, wie dies beispielsweise bei der Verwendung einer Gemischs aus Wasser und Tensiden zu beobachten ist.

Nach abgeschlossener Hauptreinigung und nach Reinigung bzw. Desinfektion werden die Reinigungsparameter, d. h. Reinigungsdauer, Reinigungsdatum, Reinigungsart und dergleichen in einen Bericht eingetragen, welcher dem Verbraucher des erfindungsgemäßen Verfahrens eine Aussage über die erfolgte und die nächste notwendige Reinigung übermittelt. In gleicher Weise werden die wesentlichen Parameter der Reinigung in ein Prüfsiegel eingetragen, welches auf die Matratze aufgeklebt wird. Dieses Prüfsiegel vermittelt beispielsweise einem Hotelgast die Information, wann die Matratze seines Hotelzimmerbettes zum letzten Mal mit welchem Verfahren gereinigt worden ist. Auf dem Prüfsiegel wird ferner die nächste notwendige Reinigung vermerkt, so daß die Matratze konstant einen Reinigungszustand aufweist, der im wesentlichen allergische Reaktionen verhindert.

Bei dem voranstehend beschriebenen Verfahren wird auf die Oberflächen einer zu reinigenden Matratze ein biologisches Desinfektions- und Reinigungsmittel aufgesprüht, das aus einem Konzentrat und II-Propanol (Isopropylalkohol) besteht. Das Mischungsverhältnis beträgt hierbei 3,5 % Konzentrat zu 96,5 % II-Propanol. Das Konzentrat besteht aus 55 % Orangenterpen, 15 % kalt gepreßtem Orangenöl, 10 % Rizinusölethoxylat, beispielsweise Eumulgin® RT 40, 5 % geringfügig ungesättigtem Fettalkoholethoxylat mit ca. 6,5 mol EO und 15 % Isopropanol.

Dieses biologische Desinfektions- und Reinigungsmittel wird auf die Matratzenoberfläche mittels einer Sprüheinrichtung aufgesprüht, wobei das Gemisch in die Matratzenoberflächen, nämlich den Matratzendrell, eindringt und dort reinigende und desinfizierende Wirkung entfaltet. Durch die leichte Flüchtigkeit der Alkoholbestandteile des Gemisches gelangt die Feuchtigkeit jedoch nicht in den inneren Kern der Matratze, so daß dort angeordnete Bestandteile der Matratze nicht wesentlich durchfeuchtet werden. Aufgrund der Flüchtigkeit des Alkohols wird somit eine schnelle Abtrockungszeit von beispielsweise nur 10 min. der auf diese Art und Weise gereinigten Matratzen erzielt. Neben der Reinigung und der Desinfektion des Matratzendrells werden auch unangenehme Gerüche, beispielsweise Fäulnisgerüche, aus dem Matratzendrell beseitigt und der Bestandteil Guanin des Milbenkots im Matratzendrell neutralisiert bzw. entfernt, so daß die Belastung des Matratzendrells mit die Hausstauballergie auslösenden Allergenen wesentlich reduziert wurde. Die Reinigung und Desinfektion einer Matratze mit dem voranstehend beschriebenen Mittel hat eine Reduzierung des Guanins im Matratzendrell erbracht, die ein Maß erreicht hat, wonach ein anschließend nach der DE-C-33 44 087 durchgeführtes Analyseverfahren das Ergebnis einer unbedenklichen Matratzenoberfläche erbracht hat.

Intensive Verunreinigungen der Matratzenoberflächen können aber auch durch Auftragen des Desinfektions- und Reinigungsmittels direkt in flüssiger Form auf die Matratze beseitigt werden. Hierbei ist es besonders vorteilhaft, daß die Flüssigkeit keine Ränder auf den Matratzenoberflächen hinterläßt, wie dies beispielsweise bei der Verwendung eines Gemisches aus Wasser und Tensiden zu beobachten ist.

## Patentansprüche

1. Verfahren zur Reinigung und Desinfektion von im wesentlichen quaderförmig ausgebildeten textilen Gegenständen wie Matratzen, bei welchem in einem ersten Schritt eine Probe der Schmutzpartikel entnommen wird, anschließend die Probe hinsichtlich ihrer Allergenbelastung in an sich bekannter Weise analysiert wird, woraufhin der Verschmutzungsgrad des zu reinigenden Gegenstandes bestimmt und der Gegenstand in Abhängigkeit des ermittelten Verschmutzungsgrades einer an sich bekannten chemiefreien, saugenden Hauptreinigung seines ummantelten Innenraums unterzogen wird, wobei der Verschmutzungsgrad die Zeitdauer der Hauptreinigung pro Flächenabschnitt des zu reinigenden Gegenstandes bestimmt, und bei welchem in einem abschließenden Schritt der zu reinigende Gegenstand mit einem Gemisch aus einem leicht flüchtigen, antibakteriell wirkenden Alkohol und einem Kondensationsprodukt des Isoprens (Isoprenoid) in einem Mischungsverhältnis von 1 Teil Isoprenoid auf 10 bis 75 Teilen Alkohol desinfiziert und an seiner Oberfläche gereinigt wird.

2. Verfahren nach Anspruch 1,
**dadurch gekennzeichnet**,
daß zumindest während der Hauptreinigung Gas einer bestimmten Konzentration und Temperatur in den Gegenstand eingeleitet wird, welches Hausstaubmilben abtötet.

3. Verfahren nach Anspruch 1,
**dadurch gekennzeichnet**,
daß als Alkohol Isopropylalkohol und als Isoprenoid Terpenöl verwendet werden, wobei letzteres vorzugsweise mit zumindest einem Aromastoff, wie Orangenaroma, vermischt wird.

4. Verfahren nach Anspruch 1,
**dadurch gekennzeichnet,**
daß 1 Teil Isoprenoid mit 10 bis 50 Teilen Alkohol gemischt wird.

5. Verfahren nach Anspruch 1,
**dadurch gekennzeichnet**,
daß dem Gemisch aus Alkohol und Isoprenoid ein Emulgator zugefügt wird.

6. Biologisches Desinfektions- und Reinigungsmittel, bestehend aus einem Kondensationsprodukt des Isoprens (Isoprenoid) und einem leicht flüchtigen, antibakteriell wirkenden Alkohol mit einwertigem Kohlenwasserstoffrest, wobei der Alkoholgehalt zwischen 80% und 98% liegt und der Rest Kondensationsprodukt des Isoprens ist, und das Kondensationsprodukt des Isoprens ggf. einen Emulgator enthält.

7. Mittel nach Anspruch 6,
**dadurch gekennzeichnet**,
daß das Kondensationsprodukt als Konzentrat ausgebildet ist, welches aus einem aromatisierten Terpen und einem Alkohol mit einwertigem Kohlenwasserstoffrest besteht, die in einem Verhältnis von 3 zu 1 bis 4 zu 1 gemischt sind.

8. Mittel nach Anspruch 6 oder 7,
**dadurch gekennzeichnet**,
daß der leichtflüchtige Alkohol Isopropylalkohol ist.

9. Mittel nach Anspruch 6,
**dadurch gekennzeichnet**,
daß der Alkoholgehalt 96,5 % und der Anteil des Kondensationsproduktes des Isoprens 3,5 % beträgt.

10. Mittel nach Anspruch 6,
**dadurch gekennzeichnet**,
daß das Kondensationsprodukt des Isoprens zwischen 30 % und 60 % Orangenterpen enthält.

11. Mittel nach Anspruch 6,
**dadurch gekennzeichnet**,
daß das Kondensationsprodukt des Isoprens bis zu 25 % Aromastoffe, insbesondere solche von Zitrusfrüchten, vorzugsweise Orangenöl, enthält, welches insbesondere kalt gepreßt ist.

12. Mittel nach Anspruch 6,
**dadurch gekennzeichnet**,
daß der Emulgator Rizinusölethoxylat und/oder geringfügig ungesättigtes Fettalkoholethoxylat mit einem Anteil von bis zu 20 %, vorzugsweise 15 %, ist.

13. Mittel nach Anspruch 12,
**dadurch gekennzeichnet**,
daß das Kondensationsprodukt des Isoprens einen Teil Fettalkoholethoxylat in geringfügig ungesättigter Form und zwei Teile Rizinusölethoxylat als Emulgator zugesetzt enthält.

14. Mittel nach Anspruch 12,
**dadurch gekennzeichnet**,
daß das geringfügig ungesättigte Fettalkoholethoxylat bis zu 8, vorzugsweise 6,5 Mol EO aufweist.

15. Biologisches Desinfektions- und Reinigungsmittel nach den Ansprüchen 7 und 10 bis 14, bestehend aus einem Konzentrat aus einem Kondensationsprodukt des Isoprens (Isoprenoid) und Isopropanol in einem Mischungsverhältnis von 96,5 % Isopropanol zu 3,5 % Konzentrat, bestehend aus 55 % Orangenterpen, 15 % kalt gepreßtem Orangenöl, 10 % Rizinusölethoxylat, 5 % geringfügig ungesättigtem Fettalkoholethoxylat mit 6,5 Mol EO und 15 % Isopropanol.

16. Mittel nach Anspruch 6 oder 15,
**dadurch gekennzeichnet**,
daß der Alkohol mit Pyridin vergält ist.

17. Verwendung eines Desinfektions- und Reinigungsmittels nach einem der Ansprüche 6 bis 16 zur Reinigung von Textilien, insesondere von nicht durchnäßbaren Textilien, wie Polstermöbel, Gardinen oder Teppiche und/oder zur Neutralisierung und/oder Entfernung von Guanin aus dem Textil.

18. Verwendung nach Anspruch 17 zur Reinigung von Matratzen, nämlich des Bezugsstoffes bzw. des Matratzendrells.

## Claims

1. Process for the cleaning and disinfection of substantially cuboid textile articles such as mattresses, wherein in a first step a specimen of the dirt particles is taken, thereafter the specimen is analyzed in a manner known per se for its allergen pollution, whereupon the degree of dirtiness of the article to be cleaned is determined and said article is, in dependency on said degree of dirtiness, subject to a sucking main cleaning free from chemistry of its sheathed interior, said degree of dirtiness determining the duration of the main cleaning per segment of area of the article to be cleaned, and wherein in a final step the article to be cleaned is disinfected and cleaned on the surface thereof by means of a slightly volatile antibacterial mixture of alcohol and a condensation product of the isoprene (isoprenoid) in a mixing ratio of 1 part of isoprenoid for 10 to 75 parts of alcohol.

2. Process according to claim 1, **characterized in** that at least during the main cleaning gas of a particular concentration and temperature is introduced into the article, which gas destructs house dust mites.

3. Process according to claim 1, **characterized in** that isopropyl alcohol is used as the alcohol and terpene oil as the isoprenoid, wherein the latter is preferably mixed with at least one aroma substance such as orange aroma.

4. Process according to claim 1, **characterized in** that 1 part of isoprenoid is mixed with 10 to 50 parts of alcohol.

5. Process according to claim 1, **characterized in** that the mixture of alcohol and isoprenoid is added an emulsifying agent.

6. Biologic disinfecting and cleaning agent consisting of a condensation product of the isoprene (isoprenoid) and a slightly volatile, antibacterial alcohol with a monovalent hydrocarbon residue, wherein the alcohol content is between 80% and 98% and the remainder is the condensation product of the isoprene, and said condensation product of the isoprene in case contains an emulsifying agent.

7. Agent according to claim 6, **characterized in** that the condensation product is formed as a concentrate which consists of an aromatized terpene and an alcohol with a monovalent hydrocarbon residue which are mixed in a ratio of 3 to 1 to 4 to 1.

8. Agent according to claim 6 or 7, **characterized in** that the slightly volatile alcohol is isopropyl alcohol.

9. Agent according to claim 6, **characterized in** that the alcohol content is 96.5 % and the proportion of the condensation product of the isoprene is 3.5 %.

10. Agent according to claim 6, **characterized in** that the condensation product of the isoprene contains between 30 % and 60% of orange terpene.

11. Agent according to claim 6, **characterized in** that the condensation product of the isoprene contains up to 25% of aroma substances, particularly those of citrus fruits, preferably orange oil which is particularly cold-pressed.

12. Agent according to claim 6, **characterized in** that the emulsifying agent is castor oil ethoxylate and/or slightly unsaturated fatty alcohol ethoxylate in a proportion of up to 20%, preferably 15%.

13. Agent according to claim 12, **characterized in** that the condensation product of the isoprene contains one part of fatty alcohol ethoxylate in a slightly unsaturated form and two parts of castor oil ethoxylate added as an emulsifying agent.

14. Agent according to claim 12, **characterized in** that the slightly unsaturated fatty alcohol ethoxylate includes up to 8, preferably 6.5 mole EO (ethylene oxide).

15. Biologic disinfecting and cleaning agent according to the claims 7 and 10 to 14, consisting of a concentrate of a condensation product of the isoprene (isoprenoid) and isopropanol in a mixing ratio of 96.5 isopropanol for 3.5 % concentrate, consisting of 55% orange terpene, 15% cold-pressed orange oil, 10% castor oil ethoxylate, 5% slightly unsaturated fatty alcohol ethoxylate with 6.5 mole EO and 15% isopropanol.

16. Agent according to claim 6 or 15, **characterized in** that the alcohol is denaturated with pyridine.

17. Usage of a disinfecting and cleaning agent according to one of the claims 6 to 16 for cleaning textiles, particularly textiles that cannot be soaked, such as upholstery, curtains or carpets, and/or for neutralizing and/or removing guanine from the textile article.

18. Usage according to claim 17 for the cleaning of mattresses, namely the textile covering or the bed tick.

## Revendications

1. Procédé de nettoyage et de désinfection d'articles textiles formés substantiellement en forme de parallélépipède comme des matelas, pour lequel lors d'une première étape il est prélevé un échantillon des particules de saleté, l'échantillon est ensuite analysé de manière connue en soi pour ce qui est de sa charge en allergènes, puis le degré de saleté de l'article à nettoyer est déterminé et l'objet est soumis, en fonction du degré de saleté déterminé, à un nettoyage principal par aspiration connu en soi, sans substances chimiques, de son espace intérieur muni d'un revêtement, le degré de saleté déterminant la durée du nettoyage principal par portion de surface de l'article à nettoyer, et pour lequel, dans une étape terminale, l'article à nettoyer est désinfecté avec un mélange composé d'un alcool légèrement volatile, à effet antibactérien, et d'un produit de condensation de l'isoprène (isoprenoïde) dans un rapport de mélange d'1 part d'isoprénoïde pour 10 à 75 parts d'alcool et il est nettoyé sur sa surface.

2. Procédé selon la revendication 1,
caractérisé en ce
que du gaz d'une certaine concentration et température, qui tue les acariens, est introduit dans l'article pendant le nettoyage principal.

3. Procédé selon la revendication 1,
caractérisé en ce
que l'on utilise comme alcool de l'alcool isopropylique et comme isoprenoïde de l'huile de thérébentine, cette dernière étant de préférence mélangée à au moins une substance aromatique, comme l'arôme d'orange.

4. Procédé selon la revendication 1,
caractérisé en ce
qu'une part d'isoprenoïde est mélangée à 10 à 50 parts d'alcool.

5. Procédé selon la revendication 1,
caractérisé en ce
qu'un émulgateur est ajouté au mélangé composé d'alcool et d'isoprenoïde.

6. Agent de nettoyage et de désinfection biologique constitué par un produit de condensation de l'isoprène (isoprénoïde) et d'un alcool légèrement volatile, à effet antibactérien, avec un reste d'hydrocarbure monovalent, la teneur en alcool étant située entre 80% et 98% et le reste étant un produit de condensation de l'isoprène et le produit de condensation de l'isoprène contenant éventuellement un émulgateur.

7. Agent de nettoyage et de désinfection biologique selon la revendication 6,
caractérisé en ce
que le produit de condensation est configuré comme concentré qui est constitué par un terpène aromatisé et un alcool avec un reste d'hydrocarbure monovalent qui sont mélangés selon un rapport de 3 à 1 à 4 à 1.

8. Agent de nettoyage et de désinfection biologique selon la revendication 6 ou 7,
caractérisé en ce
que l'alcool légèrement volatile est l'alcool isopropylique.

9. Agent de nettoyage et de désinfection biologique selon la revendication 6,
caractérisé en ce
que la teneur en alcool est de 96,5% et la part du produit de condensation de l'isoprène 3,5%.

10. Agent de nettoyage et de désinfection biologique selon la revendication 6,
caractérisé en ce
que le produit de condensation de l'isoprène contient entre 30% et 60% de terpène d'orange.

11. Agent de nettoyage et de désinfection biologique selon la revendication 6,
caractérisé en ce
que le produit de condensation de l'isoprène contient jusqu'à 25% de substances aromatiques, en particulier de celles d'agrumes, de préférence de l'huile d'orange qui est, en particulier, pressée à froid.

12. Agent de nettoyage et de désinfection biologique selon la revendication 6,
caractérisé en ce
que l'émulgateur est l'éthoxylate d'huile de ricin et/ou un éthoxylat d'alcool gras légèrement insaturé avec une proportion allant jusqu'à 20%, de préférence de 15%.

13. Agent de nettoyage et de désinfection biologique selon la revendication 12,
caractérisé en ce
que le produit de condensation de l'isoprène contient une part d'éthoxylat d'alcool gras de forme légèrement insaturée et deux parts d'éthoxylat d'huile de ricin comme émulgateur.

14. Agent de nettoyage et de désinfection biologique selon la revendication 12,
caractérisé en ce
que l'éthoxylat d'alcool gras légèrement insaturé présente jusqu'à 8, de préférence 6,5 Mol d'EO.

15. Agent de nettoyage et de désinfection biologique selon les revendications 7 et 10 à 14, composé d'un concentré constitué par un produit de condensation de l'isoprène (isoprénoïde) et de l'isopropanol dans un rapport de mélange de 96,5% par rapport à 3,5% de concentré, constitué par 55% de terpène d'orange, 15% d'huile d'orange pressée à froid, 10% d'éthoxylat d'huile de ricin, 5% d'éthoxylat d'alcool gras légèrement insaturé avec 6,5 Mol d'EO et 15% d'isopropanol.

16. Agent de nettoyage et de désinfection biologique selon la revendication 6 ou 15,
caractérisé en ce
que l'alcool est dénaturé avec de la pyridine.

17. Utilisation d'un agent de nettoyage et de désinfection selon l'une des revendications 6 à 16 pour le nettoyage de textiles, en particulier de textiles que l'on ne peut pas tremper entièrement comme des meubles rembourrés, des rideaux ou des tapis et/ou pour la neutralisation et/ou l'élimination de guanine du textile.

18. Utilisation selon la revendication 17 pour le nettoyage de matelas, en particulier du tissu de revêtement ou du coutil à matelas.
